(19) Europäisches Patentamt / European Patent Office / Office européen des brevets

(11) **EP 3 896 366 B1**

(12) **EUROPEAN PATENT SPECIFICATION**

(45) Date of publication and mention
of the grant of the patent:
**28.06.2023 Bulletin 2023/26**

(21) Application number: **19896103.9**

(22) Date of filing: **20.09.2019**

(51) International Patent Classification (IPC):
**F25B 49/02** *(2006.01)*      **F24F 11/86** *(2018.01)*
**F04C 28/08** *(2006.01)*      **F04C 28/28** *(2006.01)*
**H02P 21/05** *(2006.01)*

(52) Cooperative Patent Classification (CPC):
**F04C 29/0035; F04C 28/08; F04C 28/28;**
**F04C 29/0085; H02P 6/08; H02P 6/18;**
F04C 2270/605; F04C 2270/80; F04C 2270/86

(86) International application number:
**PCT/CN2019/106826**

(87) International publication number:
**WO 2020/119209 (18.06.2020 Gazette 2020/25)**

(54) **METHOD AND DEVICE FOR CONTROLLING THE ROTATING SPEED FLUCTUATION OF A COMPRESSOR**

VERFAHREN UND VORRICHTUNG ZUR STEUERUNG DER ROTATIONSDREHZAHLSCHWANKUNG EINES VERDICHTERS

PROCÉDÉ ET DISPOSITIF POUR RÉGULATION DE LA FLUCTUATION DE VITESSE DE ROTATION D'UN COMPRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2018 CN 201811531816**

(43) Date of publication of application:
**20.10.2021 Bulletin 2021/42**

(73) Proprietor: **Qingdao Haier Air Conditioner General
Corp., Ltd.
Qingdao, Shandong 266101 (CN)**

(72) Inventors:
• **SHI, Weipin**
**Qingdao, Shandong 266101 (CN)**
• **YANG, Xiaohui**
**Qingdao, Shandong 266101 (CN)**
• **XU, Guojing**
**Qingdao, Shandong 266101 (CN)**
• **LIU, Juke**
**Qingdao, Shandong 266101 (CN)**
• **CHENG, Yongfu**
**Qingdao, Shandong 266101 (CN)**

(74) Representative: **Peters, Sebastian Martinus
Octrooibureau Vriesendorp & Gaade B.V.
Koninginnegracht 19
2514 AB Den Haag (NL)**

(56) References cited:
**CN-A- 103 967 794      CN-A- 104 038 127
JP-A- 2017 158 414**

# EP 3 896 366 B1

**Description**

**Technical field**

The present invention belongs to the field of motor control technology, specifically, it relates to compressor control technology, and more specifically, it relates to a method and a device for suppressing fluctuations in compressor speed.

**Background**

Severe fluctuation in compressor speed can occur when compressor load torque in an extremely unstable state. This is due in part to refrigerant system failure or design flaw of control method, and eventually results in unstable operation of air conditioner and additional various adverse effects. The unstable operation further produces noise much higher than threshold of the system that was designed for, even exceeds relevant standards and further deteriorates user experience. The problem is particularly obvious for a single rotary compressor.

The prior art, such as CN104038127A, provides methods for suppressing fluctuation in compressor speed but effects are far from satisfactory, practically the problem of fluctuation in compressor speed is not properly solved.

**Summary**

The object of the present invention is to provide a method and device for suppressing fluctuation in compressor speed, and improve the effectiveness of the suppression of the fluctuation.

In order to achieve the above-mentioned purpose of the invention, the method provided by the invention adopts the following technical solutions to achieve:

A method for suppressing fluctuations in compressor speed comprises the following steps:

> obtaining a shaft error $\Delta\theta$ which reflects a deviation of an actual position of a compressor rotor from an estimated position of a compressor rotor;
> filtering the shaft error $\Delta\theta$ to obtain a corrected shaft error $\Delta\theta$ in which at least a part of fluctuation on the shaft error is eliminated and to obtain an angular velocity compensation amount P_out corresponding to the corrected shaft error $\Delta\theta$';
> compensating an output angular velocity $\Delta\omega$_PLL of the phase-locked loop regulator in the phase-locked loop for compressor control with the angular velocity compensation amount P_out to obtain a compensated angular velocity output $\Delta\omega$'; wherein the compensated angular velocity output $\Delta\omega$' = P_out + $\Delta\omega$_PLL;
> correcting a real-time angular velocity $\omega$1 which is used for compressor control according to the compensated angular velocity output and controlling the compressor according to the corrected real-time angular velocity $\omega$1;
> the step to filter the shaft error $\Delta\theta$ comprises:
>
>> expanding the shaft error $\Delta\theta$ by Fourier series to obtain a function expression of the shaft error with respect to a mechanical angle $\theta$m;
>
>> multiplying the function expression of the shaft error with $cos(\theta_{mn} + \theta_{shift-Pn})$ and $-sin(\theta_{mn} + \theta_{shift-Pn})$ respectively;
>> extracting a d-axis component of the nth harmonic of $\Delta\theta$ and a q-axis component of the nth harmonic of $\Delta\theta$ by a low-pass filter or an integrator; $\theta_{mn}$ is a mechanical angle of the nth harmonic and $\theta_{shift-Pn}$ is a phase compensation angle of the nth harmonic;
>> a d-axis component and a q-axis component of one or more harmonics are eliminated to complete a filtering process of the shaft error $\Delta\theta$.

In the method described above, the step to filter the shaft error $\Delta\theta$ to obtain a corrected shaft error $\Delta\theta$ in which at least a part of fluctuation on the shaft error is eliminated includes:
filtering the shaft error $\Delta\theta$ to at least remove a d-axis component of and a q-axis component of the first harmonic so as to realize the filtering of the first harmonic component of $\Delta\theta$ and to obtain the corrected shaft error $\Delta\theta$' in which at least the first harmonic component is removed.

Further, the step to filter the shaft error $\Delta\theta$ to obtain a corrected shaft error $\Delta\theta$ in which at least a part of fluctuation on the shaft error is eliminated includes: filtering the shaft error $\Delta\theta$ to remove a d-axis component of and a q-axis component of the second harmonic so as to realize the filtering of the first and second harmonic component of $\Delta\theta$ and to obtain the corrected shaft error $\Delta\theta$' in which the first and second harmonic components are removed.

In the method described above, the step that a d-axis component and a q-axis component of one or more

2

harmonics are eliminated to complete a filtering process of the shaft error $\Delta\theta$ includes:

extracting a d-axis component of the nth harmonic of $\Delta\theta$ and a q-axis component of the nth harmonic of $\Delta\theta$ by an integrator;
the method further includes:
each filtered result is subjected to inverse Fourier transform to obtain the angular velocity compensation amount P_out corresponding to the corrected shaft error $\Delta\theta$' in which one or more harmonic components are removed.

Further, a phase compensation angle $\theta_{shift\text{-}Pn}$ is determined according to closed-loop gain parameters $K_{P\_PLL}$ and $K_{I\_PLL}$ and an angular velocity command $\omega^*\_in$ of the phase-locked loop, which satisfies:

$$\theta_{shift-Pn} = (aK_{P\_PLL} + bK_{I-PLL} + c\,\frac{K_{P\_PLL}}{K_{I\_PLL}} + d\omega^*\_in) * \pi$$

wherein a, b, c, d are constant coefficients.
In order to achieve the aforementioned purpose of the invention, a device provided by the invention adopts the following technical solutions to achieve:
A device for suppressing fluctuation in compressor speed includes:

a shaft error acquisition unit configured to obtain a shaft error $\Delta\theta$ which reflects a deviation of an actual position of a compressor rotor from an estimated position of a compressor rotor;
an angular velocity compensation amount acquisition unit configured to filter the shaft error $\Delta\theta$ to obtain a corrected shaft error $\Delta\theta$' in which at least a part of shaft error fluctuation is eliminated and an angular velocity compensation amount P_out according to the corrected shaft error $\Delta\theta$';
a compensated angular velocity output acquisition unit configured to compensate the output angular velocity $\Delta\omega\_PLL$ of the phase-locked loop regulator in the phase-locked loop for compressor control with the angular velocity compensation amount P_out so as to obtain a compensated angular velocity output $\Delta\omega$', the compensated angular velocity output $\Delta\omega$' = P_out + $\Delta\omega\_PLL$; and
a control unit configured to correct the real-time angular velocity $\omega$1 which is used for compressor control according to the compensated angular velocity output and control the compressor according to the corrected real-time angular velocity $\omega$1;
the filtering of the shaft error $\Delta\theta$ comprises:

expanding the shaft error $\Delta\theta$ by Fourier series to obtain a function expression of the shaft error with respect to a mechanical angle $\theta m$;

multiplying the function expression of the shaft error with $cos(\theta_{mn} + \theta_{shift\text{-}Pn})$ and $[\![$-$sin(\theta_{mn} + \theta_{shift\text{-}Pn})$ respectively;
extracting a d-axis component of the nth harmonic of $\Delta\theta$ and a q-axis component of the nth harmonic of $\Delta\theta$ by a low-pass filter or an integrator; $\theta_{mn}$ is a mechanical angle of the nth harmonic and $\theta_{shift\text{-}Pn}$ is a phase compensation angle of the nth harmonic; and
a d-axis component and a q-axis component of one or more harmonics are eliminated to complete a filtering process of the shaft error $\Delta\theta$.

In the above-mentioned device, the angular velocity compensation amount acquisition unit configured to filter the shaft error $\Delta\theta$ to obtain a corrected shaft error $\Delta\theta$ in which at least a part of shaft error fluctuation is eliminated, further includes:
filtering the shaft error $\Delta\theta$ to at least remove a d-axis component of and a q-axis component of the first harmonic so as to realize the filtering of the first harmonic component of $\Delta\theta$ and to obtain the corrected shaft error $\Delta\theta$' in which at least the first harmonic component is removed.
Further, the angular velocity compensation amount acquisition unit configured to filter the shaft error $\Delta\theta$ to obtain a corrected shaft error $\Delta\theta$ in which at least a part of shaft error fluctuation is eliminated, further includes: filtering the shaft error $\Delta\theta$ to remove a d-axis component of and a q-axis component of the second harmonic so as to realize the filtering of the first and second harmonic component of $\Delta\theta$ and to obtain the corrected shaft error $\Delta\theta$' in which the first and second harmonic components are removed.
In the above-mentioned device, in the angular velocity compensation amount acquisition unit a d-axis component and a q-axis component of one or more harmonics are eliminated to complete a filtering process of the shaft error $\Delta\theta$ includes:

extracting a d-axis component of the nth harmonic of $\Delta\theta$ and a q-axis component of the nth harmonic of $\Delta\theta$ by an integrator;

the angular velocity compensation amount acquisition unit further configured that each filtered result is subjected to inverse Fourier transform to obtain the angular velocity compensation amount P_out corresponding to the corrected shaft error $\Delta\theta$' in which one or more harmonic components are removed.

Further, a phase compensation angle $\theta_{shift-Pn}$ is determined according to closed-loop gain parameters $K_{P\_PLL}$ and $K_{I\_PLL}$ and an angular velocity command $\omega^*\_in$ of the phase-locked loop, which satisfies:

$$\theta_{shift-Pn} = (aK_{P\_PLL} + bK_{I-PLL} + c\frac{K_{P\_PLL}}{K_{I\_PLL}} + d\omega^*\_in)*\pi$$

wherein a, b, c, d are constant coefficients.

Compared with the prior art, the advantages and positive effects of the present invention are: with the method and device for suppressing fluctuation in compressor speed provided by the present invention, fluctuation on the shaft error $\Delta\theta$ which reflects the deviation between the actual position and the estimated position of the compressor rotor is eliminated, and then the angular velocity compensation amount, which corresponds to the corrected shaft error in which at least part of fluctuation is filtered out, is added to the output angular velocity of the phase-locked loop regulator to obtain the compensated angular velocity output, and then the real-time angular velocity of the compressor is corrected according to the compensated angular velocity output; when the compressor is controlled by the corrected real-time angular velocity, it could make a variation from the target speed and a phase close to the variation and phase of the actual speed, so the operation of the compressor tends to be stable. Moreover, because fluctuation on the shaft error is a direct front-end cause to fluctuation on the speed, the elimination at the front end could reduce a periodic fluctuation on the shaft error, and the speed fluctuation could be more directly and quickly suppressed so as to improve the effectiveness of speed fluctuation suppression. Additionally, a phase compensation angle is used to adjust the phase of the harmonic components when extracting the harmonic components in the shaft error $\Delta\theta$ so phase characteristics of the phase-locked loop are changed, which can improve the fluctuation suppression effect during the compressor operation in the full frequency domain, thereby improving the stability of the overall frequency domain operation.

After reading the specific embodiments of the present invention in conjunction with the accompanying drawings, other features and advantages of the present invention will become clearer.

## Description of the drawings

Fig.1 is a flowchart of a method for suppressing fluctuations in compressor speed according to one aspect of the present invention;

Fig.2 is a control block diagram based on the method shown in Fig.1;

Fig.3 is a logical block diagram of a shaft error fluctuation filtering algorithm of Fig. 2;

Fig.4 is a structural block diagram of a device for suppressing fluctuations in compressor speed according to another aspect of the present invention.

## Detailed Description

In order to make the objectives, technical solutions and advantages of the present invention clear, the following will further describe the present invention in detail with reference to the accompanying drawings and embodiments.

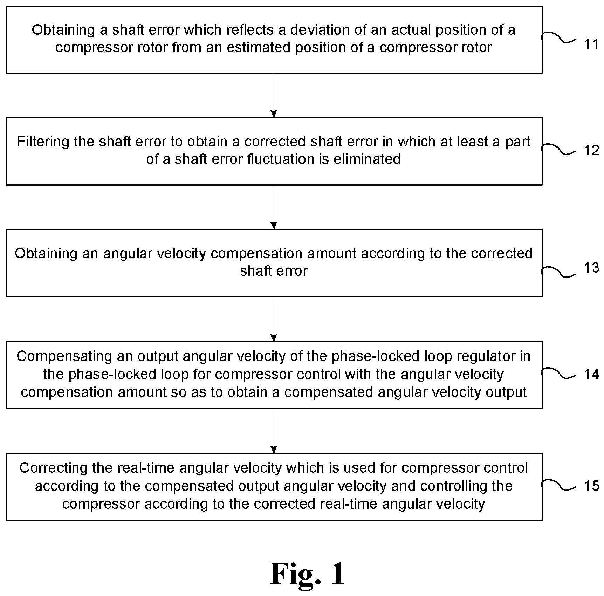

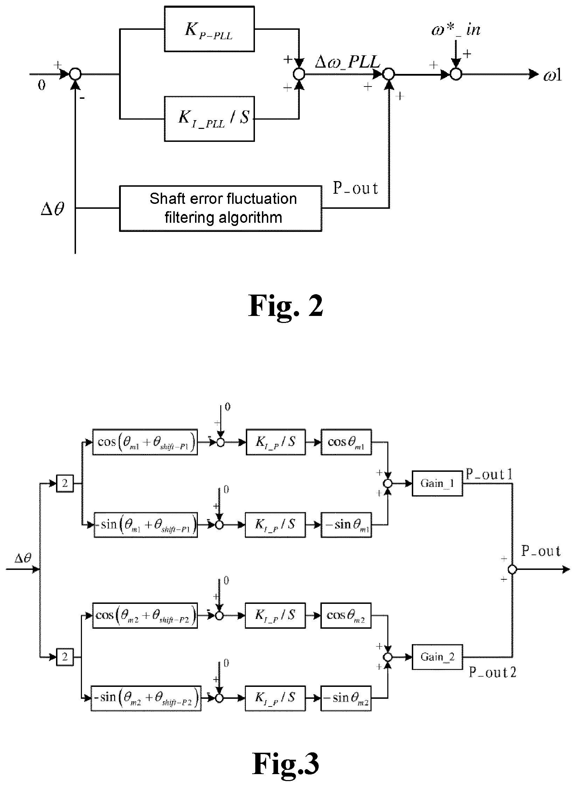

Fig. 1 is a flowchart of a method for suppressing fluctuations in compressor speed provided according to one aspect of the present invention and Fig.2 is a block diagram. Referring to Fig.1 and Fig. 2, the method for suppressing fluctuations in compressor speed comprising the following steps:

Step 11, obtaining a shaft error $\Delta\theta$ which reflects a deviation of an actual position of a compressor rotor from an estimated position of a compressor rotor.

Compressor control methods involve a phase-locked loop (PLL) technology to lock a phase of the compressor at a target phase. A control block diagram of PLL is shown in Fig.2. A typical phase-locked loop (PLL) of compressor in the prior art comprise a phase-locked loop regulator which is preferably a proportional integral regulator shown as blocks marked by $K_{P\_PLL}$ and $K_{I\_PLL}/S$ in Fig.2, wherein $K_{P\_PLL}$ and $K_{I\_PL}$ are closed-loop gain parameters of the phase-locked loop. The shaft error $\Delta\theta$ is used as a part of an input of the phase-locked loop regulator. To be specific, a difference between the shaft error $\Delta\theta$ and a target angle fluctuation amount (as an example the target angle fluctuation amount is set as 0 in Fig. 2) is input to the phase-locked loop regulator and the phase-locked loop regulator outputs an angular velocity Δω_PLL which is used by the phase-locked loop to control a real-time angular velocity ω1 for the compressor, and specifically to control a position of the compressor rotor by the real-time angular velocity ω1. The shaft error Δθ reflecting the deviation of the actual position of the compressor rotor from the estimated position could be calculated by the following formula:

$$\Delta\theta = tan^{-1}\frac{V_d^* - r^*I_d + \omega_1 L_q^* I_q}{V_q^* - r^*I_q + \omega_1 L_q^* I_d}$$

wherein $V_d^*$ is a given value of a d-axis voltage of the compressor, $V_q^*$ is a given value of q-axis voltage of the compressor, $I_d$ is a real-time d-axis current of the compressor, $I_q$ is a real-time q-axis current of the compressor, r* is a motor resistance of the compressor, $L_q^*$ is a q-axis inductance of the compressor, $\omega_1$ is a real-time angular frequency of the compressor; wherein parameters $I_d$, $I_q$ and ω1 are detected in real time by detection means known in the prior art, and the other parameter values are known values.

Step 12: Filtering the shaft error $\Delta\theta$ to obtain a corrected shaft error $\Delta\theta$ in which at least a part of shaft error fluctuation is eliminated.

Due to the fact that the shaft error is used as a part of the input of the phase-locked loop, it definitely has influence on the real-time angular velocity of the compressor output by the phase-locked loop. If the shaft error is subject to a severe fluctuation, the real-time angular velocity output by the phase-locked loop will be in variation, which further results in a problem that the rotor could not able to be held at the target phase stably which further leads to failures of the compressor such as over-current or out-of-step.

After the shaft error $\Delta\theta$ is obtained in Step 11, the step to filter the shaft error $\Delta\theta$ is disclosed so as to obtain a corrected shaft error $\Delta\theta$ in which at least a part of shaft error fluctuation is eliminated.

Wherein the filtering of the shaft error $\Delta\theta$ includes:
Firstly, the shaft error $\Delta\theta$ is expanded by Fourier series so as to obtain a function expression of the shaft error with respect to a mechanical angle θm.

Then the function expression of the shaft error multiplies with $cos(\theta_{mn} + \theta_{shift-Pn})$ and $-sin(\theta_{mn} + \theta_{shift-Pn})$ respectively; a d-axis component of the nth harmonic of Δθ and a q-axis component of the nth harmonic of $\Delta\theta$ are extracted through a low-pass filter or an integrator; $\theta_{mn}$ is a mechanical angle of the nth harmonic of $\Delta\theta$ and $\theta_{shift-Pn}$ is the phase compensation angle of the nth harmonic of $\Delta\theta$.

Optionally d-axis components and q-axis components of one or more harmonics are eliminated to finish a filtering process of the shaft error $\Delta\theta$.

A detailed description of the filtering process is following with reference to Fig. 3

Step 13: Obtaining an angular velocity compensation amount P_out according to the corrected shaft error Δθ'.

This step could be implemented by means disclosed in the prior art which are utilized to calculate an angular velocity according to an angle. A preferred processing method could refer to a description as follows.

The Step 12 and Step 13 are shown in the control block diagram of Fig. 2, and it is to adopt a fluctuation filtering algorithm on the shaft error Δθ to obtain the angular velocity compensation amount P_out.

Step 14: Compensating an output angular velocity Δω_PLL of the phase-locked loop regulator in the phase-locked loop for compressor control with the angular velocity compensation amount P_out so as to obtain a compensated angular velocity output Δω'; specifically, the compensated angular velocity output Δω' = P_out + Δω_PLL.

Step 15: Correcting the real-time angular velocity ω1 which is used for compressor control according to the compensated angular velocity output and controlling the compressor according to the corrected real-time angular velocity ω1.

Referring to Fig. 2, it is specifically to add the compensated angular velocity output Δω' to an angular velocity command ω*_in to output the real-time angular velocity ω1 which is used for compressor control; wherein the angular velocity command w*_in is an angular velocity value given by the compressor control system, and the method for determining the value of the given angular velocity command ω*_in is implemented by methods disclosed in the prior art.

With the method disclosed by the present invention, fluctuation on the shaft error Δθ which reflects the deviation between the actual position and the estimated position of the compressor rotor is eliminated, and then the angular velocity compensation amount, which corresponds to the corrected shaft error in which at least part of fluctuation is filtered out, is added to the output angular velocity of the phase-locked loop regulator to obtain the compensated angular velocity output, and then the real-time angular velocity of the compressor is corrected according to the compensated angular velocity output; when the compressor is controlled by the corrected real-time angular velocity, it could make a variation from the target speed and a phase close to the variation and phase of the actual speed, so the operation of the compressor tends to be stable. Moreover, because fluctuation on the shaft error is a direct front-end cause to fluctuation on the speed, the elimination at the front end could reduce a periodic fluctuation on the shaft error, and the speed fluctuation could be more directly and quickly suppressed so as to improve the effectiveness of speed fluctuation suppression. Additionally, a phase compensation angle is used to adjust the phase of the harmonic components when extracting the harmonic components in the shaft error $\Delta\theta$ so phase characteristics of the phase-locked loop are changed, which can improve the fluctuation suppression effect during the compressor operation in the full frequency domain, thereby improving the stability of the overall frequency domain operation.

In a preferable embodiment, the step to filter the shaft error $\Delta\theta$ to obtain the corrected shaft error $\Delta\theta'$ in which at least part of the shaft error fluctuation is filtered out specifically includes: filtering the shaft error $\Delta\theta$ to at least remove a d-axis component of and a q-axis component of the first harmonic so as to realize the filtering of the first harmonic component of $\Delta\theta$ and to obtain the corrected shaft error $\Delta\theta'$ in which at least the first harmonic component is filtered out. As a more preferred embodiment, the step to filter the shaft error $\Delta\theta$ to obtain the corrected shaft error $\Delta\theta'$ in which at least part of the shaft error fluctuation is filtered out further includes: filtering the shaft error $\Delta\theta$ to remove a d-axis component of and a q-axis component of the second harmonic so as to realize the filtering of the first and second harmonic component of $\Delta\theta$ and to obtain the corrected shaft error $\Delta\theta'$ in which at least the first and second harmonic components are filtered out. By means of filtering the first harmonic component in $\Delta\theta$, or by means of filtering the first harmonic component and the second harmonic component, most of the fluctuation components in $\Delta\theta$ could be removed, and the calculation amount is acceptable and the filtering speed is fast.

Fig.3 is a specific logical block diagram of an example of the shaft error fluctuation filtering algorithm shown in Fig. 2, and to be specific is a logic block diagram to obtain the angular velocity compensation amount P_out corresponding to a corrected shaft error $\Delta\theta'$ in which the first harmonic component and the second harmonic component of the shaft error $\Delta\theta$ is removed. Shown in Fig.3, the specific process to obtain the angular velocity compensation amount P_out corresponding to a corrected shaft error $\Delta\theta'$ which is obtained by removing the first harmonic component and the second harmonic component of the shaft error $\Delta\theta$ includes:

Firstly the shaft error $\Delta\theta$ is expanded by Fourier series so as to obtain a function expression of the shaft error $\Delta\theta$ with respect to a mechanical angle $\theta_m$, especially includes:

$$\Delta\theta(\varphi) = \frac{1}{2}\Delta\theta_{DC} + \sum_{n=1}\left((\Delta\theta_{peak\_n}\cos\phi_n)\cos n\varphi - (\Delta\theta_{peak\_n}\sin\phi_n)\sin n\varphi\right)$$

$$= \frac{1}{2}\Delta\theta_{DC} + \sum_{n=1}\left(\Delta\theta_{d\_n}\cos n\varphi - \Delta\theta_{q\_n}\sin n\varphi\right)$$

wherein $\Delta\theta_{DC}$ a direct current component of the shaft error, $\theta_{d\_n} = \theta_{peak\_n}\cos\phi_n$, $\theta_{q\_n} = \theta_{peak\_n}\sin\phi_n$, $\varphi = \theta_{m1}$;

$\Delta\theta_{peak\_n}$ is a fluctuation amplitude on the nth harmonic of the shaft error; $\theta_{m1}$, $\theta_{m2}$ are the first harmonic mechanical angle and the second harmonic mechanical angle; and the second harmonic mechanical angle $\theta_{m2}$ is expressed as: $\theta_{m2} = 2\theta_{m1}$.

The first harmonic component and the second harmonic component are extracted from the function expression, and an integrator is used to remove the first harmonic component and the second harmonic component to obtain the filtering result.

To be specific either a low-pass filtering method or an integration method could be used to extract the first harmonic component and the second harmonic component from the function expression. As shown in Fig.3 the function expression is multiplied by $cos(\theta_{m1}+\theta_{shift-P1})$ and $cos(\theta_{m2}+\theta_{shift-P2})$ respectively, a result could be filtered by a low-pass filter or alternatively be input to an integrator to calculate an average of integrals within a preset period to extract the d-axis component of the first harmonic of the axis error $\Delta\theta$ and the d-axis component of the second harmonic of the axis error $\Delta\theta$; the function expression is multiplied with $-sin(\theta_{m1}+\theta_{shift-P1})$ and $-sin(\theta_{m2}+\theta_{shift-P2})$ respectively, a result could be filtered by a low-pass filter or alternatively be input to an integrator to calculate an average of integrals within a preset period to extract the q-axis component of the first harmonic of the axis error $\Delta\theta$ and the q-axis component of the second harmonic of the axis $\Delta\theta$. The d-axis component, q-axis component of the first harmonic and the d-axis component and q-axis component of the second harmonic are respectively diminished by 0, and are respectively input into an integrator $K_{I\_P}/S$ for filtering by the integrator to remove the d-axis component, q-axis component of the first harmonic and the d-axis component, q-axis component of the second harmonic. Accordingly filtering results in which the first harmonic component and the second harmonic component are removed are obtained, which start to be represented by an angular velocity, wherein $\theta_{shift-P1}$ is a phase compensation angle of the first harmonic and $\theta_{shift-P2}$ is a phase compensation angle of the second harmonic; $\theta_{shift-P1}$ and $\theta_{shift-P2}$ could be a pair of equal preset fixed values, or a pair of preset different values or a pair of variable angle values.

As a preferred embodiment, the two phase compensation angles $\theta_{shift-P1}$ and $\theta_{shift-P2}$ are equal which are determined according to the closed-loop gain parameters $K_{P\_PLL}$ and $K_{I\_PLL}$ and the angular velocity command $\omega^*\_in$ of the phase-locked loop and satisfy:

$$\theta_{shift-Pn}=(\mathrm{a}K_{P\_PLL}+bK_{I\_PLL}+\mathrm{c}\left.K_{P\_PLL}\middle/K_{I\_PLL}\right.+d\omega^*\_in)*\pi$$

wherein a, b, c, d are constant coefficients, and for a control system, the constant coefficients are fixed.

Each filtered result is subjected to inverse Fourier transform to obtain the angular velocity compensation amount P_out corresponding to the corrected shaft error $\Delta\theta'$ in which the first harmonic component and the second harmonic component are removed; to be specific, the filtered result in which the d-axis component of the first harmonic is subjected to inverse Fourier transform to obtain a result and the filtered result in which the q-axis component of the first harmonic is also subjected to inverse Fourier transform to obtain another result, and the two results are added to obtain the angular velocity compensation amount P_out1 corresponding to the corrected shaft error in which the first harmonic is removed; the filtered result in which the d-axis component of the second harmonic is subjected to inverse Fourier transform to obtain a result and the filtered result in which the q-axis component of the second harmonic is also subjected to inverse Fourier transform to obtain another result, and the two results are further added to obtain the angular velocity compensation amount P_out2 corresponding to the corrected shaft error in which the second harmonic is removed; a sum of the angular velocity compensation amount P_out1 and the angular velocity compensation amount P_out2 is the angular velocity compensation amount corresponding to the corrected shaft error in which the first harmonic and the second harmonic are removed, P_out = P_out1+P_out2.

As a preferred embodiment, enable switches are added, which are used to control the filtering of the harmonic components. To be specific, as shown in Fig.3, Gain_1 and Gain_2 are enable switches configured to initiate or terminate the filtering algorithm: when the enable switches Gain_1 and Gain_2 are in a state to initiate the filtering algorithm of the first harmonic and the filtering algorithm of the second harmonic, the angular velocity compensation amount P_out = P_out1+P_out2 corresponding to the corrected shaft error $\Delta\theta'$ in which the first harmonic and the second harmonic are removed is obtained; when the enable switches Gain_1 and Gain_2 are in a state to terminate the filtering algorithm of the first harmonic and the filtering algorithm of the second harmonic, the function to filter the shaft error is terminated and the angular velocity compensation amount P_out could not be output further ; when one enable switch is in a state to initiate the filtering algorithm and the other enable switch is in a state to terminate the filtering algorithm, the angular velocity compensation amount P_out obtained is either an angular velocity compensation amount in which merely the first harmonic is removed (enable switch Gain_1 is in a state to initiate the filtering algorithm and enable switch Gain_2 is in a state to terminate the filtering algorithm ) or an angular velocity compensation amount in which merely the second harmonic is removed (enable switch Gain_1 is in a state to terminate the filtering algorithm and enable switch Gain_2 is in a state to initiate the filtering algorithm).

In an embodiment to merely remove the first harmonic component, the process disclosed in Fig. 3 to extract and remove the first harmonic component could be directly adopted. It is undoubtedly that in the embodiment to merely remove the first harmonic component, an enable switch could be added to control the filtering of the first harmonic component and its specific implementation is shown in Fig. 3 which is not repeated.

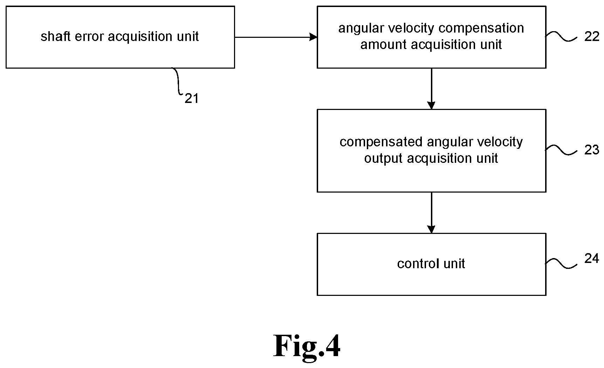

Fig.4 is a structural block diagram of a device for suppressing fluctuations in compressor speed according to another aspect of the present invention.

Shown in Fig.4, the structural units, the connections among the structural units and the functions of the structural units of the device will be described in detail as follows:

A shaft error acquisition unit 21 configured to obtain a shaft error $\Delta\theta$ which reflects a deviation of an actual position of a compressor rotor from an estimated position of a compressor rotor;

An angular velocity compensation amount acquisition unit 22 configured to filter the shaft error $\Delta\theta$ to obtain a corrected shaft error $\Delta\theta$ in which at least a part of shaft error fluctuation is eliminated and an angular velocity compensation amount P_out according to the corrected shaft error $\Delta\theta'$.

A compensated angular velocity output acquisition unit 23 configured to compensate the output angular velocity $\Delta\omega\_PLL$ of the phase-locked loop regulator in the phase-locked loop for compressor control with the angular velocity compensation amount P_out so as to obtain a compensated angular velocity output $\Delta\omega'$, the compensated angular velocity output $\Delta\omega' = P\_out + \Delta\omega\_PLL$.

A control unit 24 is configured to correct the real-time angular velocity $\omega 1$ which is used for compressor control according to the compensated angular velocity output and control the compressor according to the corrected real-time angular velocity ω1.

The device with the above-mentioned structural units could be applied to compressors, such as air conditioners. The compressors with such a device could run corresponding program and work according to the process of the above-mentioned method and the preferred embodiments, so as to suppress the fluctuation on the compressor speed and realize the technical effects of the above method embodiments.

The above embodiments are only used to illustrate the technical solutions of the present invention, but not to limit them; although the present invention has been described in detail with reference to the foregoing embodiments, for those of ordinary skill in the art, the technical solutions of the foregoing embodiments can still be described. The invention is defined by the appended claims.

**Claims**

1. A method for suppressing fluctuations in compressor speed, **characterized in that** the method comprises the following steps:

   obtaining a shaft error $\Delta\theta$ which reflects a deviation of an actual position of a compressor rotor from an estimated position of a compressor rotor (11);
   filtering the shaft error $\Delta\theta$ to obtain a corrected shaft error $\Delta\theta$ in which at least a part of fluctuation on the shaft error is eliminated (12) and obtaining an angular velocity compensation amount P_out corresponding to the corrected shaft error Δθ' (13);
   compensating an output angular velocity Δω_PLL of a phase-locked loop regulator in a phase-locked loop for compressor control with the angular velocity compensation amount P_out to obtain a compensated angular velocity output Δω' (14); wherein the compensated angular velocity output Δω' = P_out + Δω_PLL; and
   correcting a real-time angular velocity ω1 which is used for compressor control according to the compensated angular velocity output Δω' and controlling the compressor according to the corrected real-time angular velocity ω1 (15) ;
   wherein the step to filter the shaft error $\Delta\theta$ (11) comprises:

   expanding the shaft error $\Delta\theta$ by Fourier series to obtain a function expression of the shaft error with respect to a mechanical angle $\theta m$;
   multiplying the function expression of the shaft error with $cos(\theta_{mn} + \theta_{shift\text{-}Pn})$ and $-sin(\theta_{mn} + \theta_{shift\text{-}Pn})$ respectively; extracting a d-axis component of a nth harmonic of $\Delta\theta$ and a q-axis component of a nth harmonic of $\Delta\theta$ by a low-pass filter or an integrator; $\theta_{mn}$ is a mechanical angle of a nth harmonic and $\theta_{shift\text{-}Pn}$ is a phase compensation angle of a nth harmonic; and
   eliminating a d-axis component and a q-axis component of one or more harmonics to complete a filtering process of the shaft error $\Delta\theta$.

2. The method according to claim 1, **characterized in that**,
   the step that filtering the shaft error $\Delta\theta$ to obtain a corrected shaft error $\Delta\theta$ in which at least a part of fluctuation on the shaft error is eliminated (12) further includes:
   filtering the shaft error $\Delta\theta$ to remove at least a d-axis component of a first harmonic of $\Delta\theta$ and a q-axis component of a first harmonic of $\Delta\theta$ to realize the filtering of the first harmonic component of $\Delta\theta$ and to obtain a corrected shaft error $\Delta\theta$ in which at least the first harmonic component is removed.

3. The method according to claim 2, **characterized in that**,
   the step that filtering the shaft error $\Delta\theta$ to obtain a corrected shaft error $\Delta\theta$ in which at least a part of fluctuation on the shaft error is eliminated (12) further includes:
   filtering the shaft error $\Delta\theta$ to remove a d-axis component of the second harmonic of $\Delta\theta$ and a q-axis component of the second harmonic $\Delta\theta$ to realize the filtering of the first harmonic component of $\Delta\theta$ and the second harmonic component of $\Delta\theta$ and to obtain a corrected shaft error $\Delta\theta$ in which the first and second harmonic components are removed.

4. The method according to claim 1, **characterized in that**,
   the step that eliminating a d-axis component and a q-axis component of one or more harmonics to complete a filtering process of the shaft error $\Delta\theta$ further includes:

extracting a d-axis component of a nth harmonic of $\Delta\theta$ and a q-axis component of a nth harmonic of $\Delta\theta$ by an integrator;
the method further includes:
each filtered result is subjected to inverse Fourier transform to obtain the angular velocity compensation amount P_out corresponding to the corrected shaft error $\Delta\theta$' in which one or more harmonic components are removed.

5. The method according to any one of claim 1 to 4, **characterized in that**, a phase compensation angle $\theta_{shift-Pn}$ is determined according to closed-loop gain parameters $K_{P\_PLL}$ and $K_{I\_PLL}$ and an angular velocity command $\omega^*\_in$ of the phase-locked loop, which satisfies:

$$\theta_{shift-Pn} = (\mathrm{a}K_{P\_PLL} + bK_{I-PLL} + \mathrm{c}\left.K_{P\_PLL}\middle/K_{I\_PLL}\right. + d\omega^*\_in)*\pi$$

wherein a, b, c, d are constant coefficients.

6. A device for suppressing fluctuations in compressor speed, **characterized in that** the device includes:

a shaft error acquisition unit (21) configured to obtain a shaft error $\Delta\theta$ which reflects a deviation of an actual position of a compressor rotor from an estimated position of a compressor rotor;
an angular velocity compensation amount acquisition unit (22) configured to filter the shaft error $\Delta\theta$ to obtain a corrected shaft error $\Delta\theta$ in which at least a part of shaft error fluctuation is eliminated and to obtain an angular velocity compensation amount P_out according to the corrected shaft error $\Delta\theta$';
a compensated angular velocity output acquisition unit (23) configured to compensate the output angular velocity $\Delta\omega\_PLL$ of a phase-locked loop regulator in a phase-locked loop for compressor control with the angular velocity compensation amount P_out to obtain a compensated angular velocity output $\Delta\omega$', the compensated angular velocity output $\Delta\omega$' = P_out + $\Delta\omega\_PLL$; and
a control unit (24) configured to correct the real-time angular velocity $\omega1$ which is used for compressor control according to the compensated angular velocity output and control the compressor according to the corrected real-time angular velocity $\omega1$;
wherein the filtering of the shaft error $\Delta\theta$ by the angular velocity compensation amount acquisition unit (22) comprises:

expanding the shaft error $\Delta\theta$ by Fourier series to obtain a function expression of the shaft error with respect to a mechanical angle $\theta m$;
multiplying the function expression of the shaft error with $cos(\theta_{mn} + \theta_{shift-Pn})$ and $-sin(\theta_{mn} + \theta_{shift-Pn})$ respectively; extracting a d-axis component of a nth harmonic of $\Delta\theta$ and a q-axis component of a nth harmonic of $\Delta\theta$ by a low-pass filter or an integrator; $\theta_{mn}$ is a mechanical angle of a nth harmonic and $\theta_{shift-Pn}$ is a phase compensation angle of a nth harmonic; and
eliminating a d-axis component and a q-axis component of one or more harmonics to complete a filtering process of the shaft error $\Delta\theta$.

7. The device according to claim 6, **characterized in that**, the angular velocity compensation amount acquisition unit (22) configured to filter the shaft error $\Delta\theta$ to obtain a corrected shaft error $\Delta\theta$ in which at least a part of shaft error fluctuation is eliminated, further includes:
filtering the shaft error $\Delta\theta$ to at least remove a d-axis component of and a q-axis component of a first harmonic to realize the filtering of the first harmonic component of $\Delta\theta$ and to obtain the corrected shaft error $\Delta\theta$' in which at least the first harmonic component is removed.

8. The device according to claim 7, **characterized in that**, the angular velocity compensation amount acquisition unit (22) configured to filter the shaft error $\Delta\theta$ to obtain a corrected shaft error $\Delta\theta$ in which at least a part of shaft error fluctuation is eliminated, further includes:
filtering the shaft error $\Delta\theta$ to remove a d-axis component of a second harmonic of $\Delta\theta$ and a q-axis component of a second harmonic of $\Delta\theta$ to realize the filtering of the first and second harmonic component of $\Delta\theta$ and to obtain the corrected shaft error $\Delta\theta$ in which the first and second harmonic components are removed.

9. The device according to claim 6, **characterized in that**, in the angular velocity compensation amount acquisition unit (22) a d-axis component and a q-axis component of one or more harmonics are eliminated to complete a filtering process of the shaft error $\Delta\theta$ further includes:

extracting a d-axis component of a nth harmonic of $\Delta\theta$ and a q-axis component of a nth harmonic of $\Delta\theta$ by an integrator;

the angular velocity compensation amount acquisition unit (22) further configured that each filtered result is subjected to inverse Fourier transform to obtain the angular velocity compensation amount P_out corresponding to the corrected shaft error $\Delta\theta$ in which one or more harmonic components are removed.

10. The device according to anyone of claim 6 to 9, **characterized in that** a phase compensation angle $\theta_{shift-Pn}$ is determined according to closed-loop gain parameters $K_{P\_PLL}$ and $K_{I\_PLL}$ and an angular velocity command $\omega^*\_in$ of the phase-locked loop, which satisfies:

$$\theta_{shift-Pn}=(aK_{P\_PLL}+bK_{I-PLL}+c\frac{K_{P\_PLL}}{K_{I\_PLL}}+d\omega^*\_in)*\pi$$

wherein a, b, c, d are constant coefficients.

**Patentansprüche**

1. Verfahren zum Unterdrücken von Schwankungen einer Verdichterdrehzahl, **dadurch gekennzeichnet, dass** das Verfahren die folgenden Schritte umfasst:

Erhalten eines Wellenfehlers $\Delta\theta$, der eine Abweichung einer tatsächlichen Position eines Verdichterrotors von einer geschätzten Position eines Verdichterrotors (11) wiedergibt;
Filtern des Wellenfehlers $\Delta\theta$, um einen korrigierten Wellenfehler $\Delta\theta$ zu erhalten, bei dem zumindest ein Teil einer Schwankung am Wellenfehler beseitigt ist (12), und Erhalten einer Winkelgeschwindigkeitskompensationsmenge P_out, die dem korrigierten Wellenfehler $\Delta\theta'$ entspricht (13) ;
Kompensieren einer Ausgangswinkelgeschwindigkeit $\Delta\omega$_PLL eines Phasenregelschleifereglers in einer Phasenregelschleife zur Verdichtersteuerung mit der Winkelgeschwindigkeitskompensationsmenge P_out, um eine kompensierte Winkelgeschwindigkeitsausgabe $\Delta\omega'$ zu erhalten (14); wobei die kompensierte Winkelgeschwindigkeitsausgabe $\Delta\omega'$ = P_out + $\Delta\omega$_PLL ist; und
Korrigieren einer Echtzeitwinkelgeschwindigkeit $\omega1$, die zur Verdichtersteuerung benutzt wird, gemäß der kompensierten Winkelgeschwindigkeitsausgabe $\Delta\omega'$ und Steuern des Verdichters gemäß der korrigierten Echtzeitwinkelgeschwindigkeit $\omega1$ (15);
wobei der Schritt zum Filtern des Wellenfehlers $\Delta\theta$ (11) umfasst:

Expandieren des Wellenfehlers $\Delta\theta$ durch Fourier-Reihen, um einen Funktionsausdruck des Wellenfehlers bezüglich eines mechanischen Winkels $\theta m$ zu erhalten;
Multiplizieren des Funktionsausdrucks des Wellenfehlers mit $cos(\theta_{mn} + \theta_{shift-Pn})$ und beziehungsweise $-sin(\theta_{mn} + \theta_{shift-Pn})$; Extrahieren einer d-Achsen-Komponente einer n-ten Harmonischen von $\Delta\theta$ und eine q-Achsen-Komponente einer n-ten Harmonischen von $\Delta\theta$ durch einen Tiefpassfilter oder einen Integrator; wobei $\theta_{mn}$ ein mechanischer Winkel einer n-ten Harmonischen ist und $\theta_{shift-Pn}$ ein Phasenkompensationswinkel einer n-ten Harmonischen ist; und
Eliminieren einer d-Achsen-Komponente und einer q-Achsen-Komponente einer oder mehrerer Harmonischen, um einen Filterprozess des Wellenfehlers $\Delta\theta$ abzuschließen.

2. Verfahren nach Anspruch 1, **dadurch gekennzeichnet, dass**
der Schritt zum Filtern des Wellenfehlers $\Delta\theta$ zum Erhalten eines korrigierten Wellenfehlers $\Delta\theta$, bei dem zumindest ein Teil einer Schwankung am Wellenfehler beseitigt ist (12), ferner enthält:
Filtern des Wellenfehlers $\Delta\theta$ zum Beseitigen von zumindest einer d-Achsen-Komponente einer ersten Harmonischen von $\Delta\theta$ und einer q-Achsen-Komponente einer ersten Harmonischen von $\Delta\theta$, um das Filtern der ersten harmonischen Komponente von $\Delta\theta$ auszuführen und einen korrigierten Wellenfehler $\Delta\theta$ zu erhalten, bei dem zumindest die erste harmonische Komponente beseitigt ist.

3. Verfahren nach Anspruch 2, **dadurch gekennzeichnet, dass**
der Schritt zum Filtern des Wellenfehlers $\Delta\theta$ zum Erhalten eines korrigierten Wellenfehlers $\Delta\theta$, bei dem zumindest

ein Teil einer Schwankung am Wellenfehler beseitigt ist (12), ferner enthält:

Filtern des Wellenfehlers $\Delta\theta$ zum Beseitigen einer d-Achsen-Komponente der zweiten Harmonischen von $\Delta\theta$ und einer q-Achsen-Komponente der zweiten Harmonischen von $\Delta\theta$, um das Filtern der ersten harmonischen Komponente von $\Delta\theta$ und der zweiten harmonischen Komponente von $\Delta\theta$ auszuführen und einen korrigierten Wellenfehler $\Delta\theta$ zu erhalten, bei dem die erste und zweite harmonische Komponente beseitigt ist.

4. Verfahren nach Anspruch 1, **dadurch gekennzeichnet, dass**

der Schritt zum Eliminieren einer d-Achsen-Komponente und einer q-Achsen-Komponente einer oder mehrerer Harmonischen, um einen Filterprozess des Wellenfehlers $\Delta\theta$ abzuschließen, ferner enthält:

Extrahieren einer d-Achsen-Komponente einer n-ten Harmonischen von $\Delta\theta$ und eine q-Achsen-Komponente einer n-ten Harmonischen von $\Delta\theta$ durch einen Integrator;
wobei das Verfahren ferner enthält, dass:
jedes gefilterte Ergebnis einer inversen FourierTransformation unterzogen wird, um die Winkelgeschwindigkeitskompensationsmenge P_out zu erhalten, welche dem korrigierten Wellenfehler $\Delta\theta$ entspricht, in welchem eine oder mehrere harmonische Komponenten beseitigt sind.

5. Verfahren nach einem der Ansprüche 1 bis 4, **dadurch gekennzeichnet, dass** ein Phasenkompensationswinkel $\theta_{shift\text{-}Pn}$ gemäß Verstärkungsparametern $K_{P\_PLL}$ und $K_{I\_PLL}$ der geschlossenen Schleife und einem Winkelgeschwindigkeitsbefehl $\omega^*\_in$ in der Phasenregelschleife bestimmt wird, der Folgendes erfüllt:

$$\theta_{shift\_Pn}=(\mathrm{a}K_{P\_PLL}+bK_{I\text{-}PLL}+c\,{K_{P\_PLL}}\Big/{K_{I\_PLL}}+d\omega^*\_in)^*\pi$$

wobei a, b, c, d konstante Koeffizienten sind.

6. Vorrichtung zum Unterdrücken von Schwankungen einer Verdichterdrehzahl, **dadurch gekennzeichnet, dass** die Vorrichtung enthält:

eine Wellenfehlererfassungseinheit (21), die zum Erhalten eines Wellenfehlers $\Delta\theta$ konfiguriert ist, der eine Abweichung einer tatsächlichen Position eines Verdichterrotors von einer geschätzten Position eines Verdichterrotors wiedergibt;
eine Winkelgeschwindigkeitskompensationsmengen-Erfassungseinheit (22), die zum Filtern des Wellenfehlers $\Delta\theta$, um einen korrigierten Wellenfehler $\Delta\theta$ zu erhalten, bei dem zumindest ein Teil einer Schwankung am Wellenfehler beseitigt ist, und Erhalten einer Winkelgeschwindigkeitskompensationsmenge P_out, die dem korrigierten Wellenfehler $\Delta\theta'$ entspricht, konfiguriert ist;
eine Erfassungseinheit für eine kompensierte Winkelgeschwindigkeitsausgabe (23), die zum Kompensieren einer Ausgangswinkelgeschwindigkeit $\Delta\omega\_PLL$ eines phasenregelschleifereglers in einer Phasenregelschleife zur Verdichtersteuerung mit der Winkelgeschwindigkeitskompensationsmenge P_out konfiguriert ist, um eine kompensierte Winkelgeschwindigkeitsausgabe $\Delta\omega'$ zu erhalten; wobei die kompensierte Winkelgeschwindigkeitsausgabe $\Delta\omega'$ = P_out + $\Delta\omega\_PLL$ ist; und
eine Steuereinheit (24), die zum Korrigieren der Echtzeitwinkelgeschwindigkeit $\omega1$, die zur Verdichtersteuerung benutzt wird, gemäß der kompensierten Winkelgeschwindigkeitsausgabe und Steuern des Verdichters gemäß der korrigierten Echtzeitwinkelgeschwindigkeit $\omega1$ konfiguriert ist;
wobei das Filtern des Wellenfehlers $\Delta\theta$ durch die Winkelgeschwindigkeitskompensationsmengen-Erfassungseinheit (22) umfasst:

Expandieren des Wellenfehlers $\Delta\theta$ durch Fourier-Reihen, um einen Funktionsausdruck des Wellenfehlers bezüglich eines mechanischen Winkels $\theta m$ zu erhalten;
Multiplizieren des Funktionsausdrucks des Wellenfehlers mit $cos(\theta_{mn} + \theta_{shift\text{-}Pn})$und beziehungsweise $-sin(\theta_{mn} + \theta_{shift\text{-}Pn})$; Extrahieren einer d-Achsen-Komponente einer n-ten Harmonischen von $\Delta\theta$ und eine q-Achsen-Komponente einer n-ten Harmonischen von $\Delta\theta$ durch einen Tiefpassfilter oder einen Integrator;
wobei $\theta_{mn}$ ein mechanischer Winkel einer n-ten Harmonischen ist und $\theta_{shift\text{-}Pn}$ ein Phasenkompensationswinkel einer n-ten Harmonischen ist; und
Eliminieren einer d-Achsen-Komponente und einer q-Achsen-Komponente einer oder mehrerer Harmonischen, um einen Filterprozess des Wellenfehlers $\Delta\theta$ abzuschließen.

7. Vorrichtung nach Anspruch 6, **dadurch gekennzeichnet, dass** die Winkelgeschwindigkeitskompensationsmengen-Erfassungseinheit (22), die zum Filtern des Wellenfehlers $\Delta\theta$ konfiguriert ist, um einen korrigierten Wellenfehler $\Delta\theta$ zu erhalten, bei dem zumindest ein Teil einer Schwankung am Wellenfehler beseitigt ist, ferner enthält:
Filtern des Wellenfehlers $\Delta\theta$ zum Beseitigen von zumindest einer d-Achsen-Komponente und einer q-Achsen-Komponente einer ersten Harmonischen, um das Filtern der ersten harmonischen Komponente von $\Delta\theta$ auszuführen und einen korrigierten Wellenfehler $\Delta\theta$ zu erhalten, bei dem zumindest die erste harmonische Komponente beseitigt ist.

8. Vorrichtung nach Anspruch 7, **dadurch gekennzeichnet, dass** die Winkelgeschwindigkeitskompensationsmengen-Erfassungseinheit (22), die zum Filtern des Wellenfehlers $\Delta\theta$ konfiguriert ist, um einen korrigierten Wellenfehler $\Delta\theta$ zu erhalten, bei dem zumindest ein Teil einer Schwankung am Wellenfehler beseitigt ist, ferner enthält:
Filtern des Wellenfehlers $\Delta\theta$ zum Beseitigen einer d-Achsen-Komponente einer zweiten Harmonischen von $\Delta\theta$ und einer q-Achsen-Komponente einer zweiten Harmonischen von $\Delta\theta$, um das Filtern der ersten und zweiten harmonischen Komponente von $\Delta\theta$ auszuführen und einen korrigierten Wellenfehler $\Delta\theta$ zu erhalten, bei dem zumindest die erste und zweite harmonische Komponente beseitigt ist.

9. Vorrichtung nach Anspruch 6, **dadurch gekennzeichnet, dass** eine d-Achsen-Komponente und eine q-Achsen-Komponente einer oder mehrerer Harmonischen in der Winkelgeschwindigkeitskompensationsmengen-Erfassungseinheit (22) eliminiert werden, um einen Filterprozess des Wellenfehlers $\Delta\theta$ abzuschließen, ferner enthält:

Extrahieren einer d-Achsen-Komponente einer n-ten Harmonischen von $\Delta\theta$ und eine q-Achsen-Komponente einer n-ten Harmonischen von $\Delta\theta$ durch einen Integrator;
wobei die Winkelgeschwindigkeitskompensationsmengen-Erfassungseinheit (22) ferner dazu konfiguriert ist, dass jedes gefilterte Ergebnis einer inversen Fourier-Transformation unterzogen wird, um die Winkelgeschwindigkeitskompensationsmenge P_out zu erhalten, welche dem korrigierten Wellenfehler $\Delta\theta$ entspricht, in welchem eine oder mehrere harmonische Komponenten beseitigt sind.

10. Vorrichtung nach einem der Ansprüche 6 bis 9, **dadurch gekennzeichnet, dass** ein Phasenkompensationswinkel $\theta_{shift\text{-}Pn}$ gemäß Verstärkungsparametern $K_{P\_PLL}$ und $K_{I\_PLL}$ der geschlossenen Schleife und einem Winkelgeschwindigkeitsbefehl w*_in der Phasenregelschleife bestimmt wird, der Folgendes erfüllt:

$$\theta_{shift\text{-}Pn} = (aK_{P\_PLL} + bK_{I\text{-}PLL} + c\frac{K_{P\_PLL}}{K_{I\_PLL}} + d\omega*\_in)*\pi$$

wobei a, b, c, d konstante Koeffizienten sind.

**Revendications**

1. Procédé pour supprimer les fluctuations de vitesse d'un compresseur, **caractérisé par le fait que** le procédé comprend les étapes suivantes :

obtenir une erreur d'arbre $\Delta\theta$ qui reflète un écart d'une position réelle d'un rotor de compresseur par rapport à une position estimée d'un rotor de compresseur (11) ;
filtrer l'erreur d'arbre $\Delta\theta$ pour obtenir une erreur d'arbre corrigée $\Delta\theta'$ dans laquelle au moins une partie d'une fluctuation de l'erreur d'arbre est éliminée (12) et obtenir un montant de compensation de vitesse angulaire P_out correspondant à l'erreur d'arbre corrigée $\Delta\theta'$(13) ;
compenser une vitesse angulaire de sortie $\Delta\omega\_PLL$ d'un régulateur à boucle à verrouillage de phase dans une boucle à verrouillage de phase pour commande de compresseur avec le montant de compensation de vitesse angulaire P_out pour obtenir une vitesse angulaire de sortie compensée $\Delta\omega'$ (14) ; la vitesse angulaire de sortie compensée étant $\Delta\omega' = $ P_out + $\Delta\omega\_PLL$ ; et
corriger une vitesse angulaire en temps réel $\omega 1$ qui est utilisée pour la commande du compresseur en fonction de la sortie de vitesse angulaire compensée $\Delta\omega'$ et commander le compresseur en fonction de la vitesse angulaire en temps réel corrigée $\omega 1$ (15);
dans lequel l'étape de filtrer l'erreur d'arbre $\Delta\theta$ (11) comprend :

développer en série de Fourier l'erreur d'arbre $\Delta\theta$ pour obtenir une expression fonctionnelle de l'erreur d'arbre par rapport à un angle mécanique $\theta$m ;

multiplier l'expression fonctionnelle de l'erreur d'arbre par $\cos(\theta_{mn} + \theta_{shift-Pn})$ et $-\sin(\theta_{mn} + \theta_{shift-Pn})$ respectivement ; extraire une composante d'axe d d'une nième harmonique de $\Delta\theta$ et une composante d'axe q d'une nième harmonique de $\Delta\theta$ par un filtre passe-bas ou un intégrateur ; $\theta_{mn}$ est un angle mécanique d'une nième harmonique et $\theta_{shift-Pn}$ est un angle de compensation de phase d'une nième harmonique ; et éliminer une composante d'axe d et une composante d'axe q d'une ou de plusieurs harmoniques pour compléter un processus de filtrage de l'erreur d'arbre $\Delta\theta$.

2. Procédé selon la revendication 1, **caractérisé en ce que** l'étape de filtrage de l'erreur d'arbre $\Delta\theta$ pour obtenir une erreur d'arbre corrigée $\Delta\theta'$ dans laquelle au moins une partie de la fluctuation de l'erreur d'arbre est éliminée (12) comprend en outre :

filtrer l'erreur d'arbre $\Delta\theta$ pour au moins supprimer une composante d'axe d d'une première harmonique de $\Delta\theta$ et une composante d'axe q d'une première harmonique de $\Delta\theta$ pour réaliser le filtrage de la première composante harmonique de $\Delta\theta$ et pour obtenir une erreur d'arbre corrigée $\Delta\theta'$ dans laquelle au moins la première composante harmonique est supprimée.

3. Procédé selon la revendication 2, **caractérisé en ce que**,

l'étape consistant à filtrer l'erreur d'arbre $\Delta\theta$ pour obtenir une erreur d'arbre corrigée $\Delta\theta'$ dans laquelle au moins une partie de la fluctuation de l'erreur d'arbre est éliminée (12) comprend en outre :

filtrer l'erreur d'arbre $\Delta\theta$ pour supprimer une composante d'axe d de la seconde harmonique de $\Delta\theta$ et une composante d'axe q de la seconde harmonique de $\Delta\theta$ pour réaliser le filtrage de la première composante harmonique de $\Delta\theta$ et de la seconde composante harmonique de $\Delta\theta$ et pour obtenir une erreur d'arbre corrigée $\Delta\theta'$ dans laquelle la première composante harmonique et la seconde composante harmonique sont supprimées.

4. Procédé selon la revendication 1, **caractérisé en ce que**,

l'étape d'élimination d'une composante d'axe d et d'une composante d'axe q d'une ou plusieurs harmoniques pour compléter un processus de filtrage de l'erreur d'arbre $\Delta\theta$ comprend en outre :

extraire une composante d'axe d d'une nième harmonique de $\Delta\theta$ et une composante d'axe q d'une nième harmonique de $\Delta\theta$ par un intégrateur ;

le procédé comprend en outre :

chaque résultat filtré est soumis à une transformée de Fourier inverse pour obtenir le montant de compensation de vitesse angulaire P_out correspondant à l'erreur d'arbre corrigée $\Delta\theta'$ dans laquelle une ou plusieurs composantes harmoniques sont supprimées.

5. Procédé selon l'une quelconque des revendications 1 à 4, **caractérisé en ce qu'**un angle de compensation de phase $\theta_{shift-Pn}$ est déterminé en fonction de paramètres de gain en boucle fermée $K_{P\_PLL}$ et $K_{I\_PLL}$ et d'une commande de vitesse angulaire $\omega*\_in$ de la boucle à verrouillage de phase, qui satisfait :

$$\theta_{shift-Pn} = (aK_{P\_PLL} + bK_{I\_PLL} + cK_{P\_PLL}/K_{I\_PLL} + d\omega*\_in)*\pi$$

dans laquelle a, b, c, d sont des coefficients constants.

6. Dispositif pour supprimer les fluctuations de vitesse d'un compresseur, **caractérisé par le fait que** le dispositif comprend :

une unité d'acquisition d'erreur d'arbre (21) configurée pour obtenir une erreur d'arbre $\Delta\theta$ qui reflète un écart d'une position réelle d'un rotor de compresseur par rapport à une position estimée d'un rotor de compresseur ;

une unité d'acquisition de montant de compensation de vitesse angulaire (22) configurée pour filtrer l'erreur d'arbre $\Delta\theta$ pour obtenir une erreur d'arbre corrigée $\Delta\theta'$ dans laquelle au moins une partie de la fluctuation de l'erreur d'arbre est éliminée (12) et pour obtenir un montant de compensation de vitesse angulaire P_out correspondant à l'erreur d'arbre corrigée $\Delta\theta'$;

une unité d'acquisition de vitesse angulaire de sortie compensée (23) configurée pour compenser la vitesse angulaire de sortie $\Delta\omega\_PLL$ d'un régulateur à boucle à verrouillage de phase dans une boucle à verrouillage de phase pour commande de compresseur avec le montant de compensation de vitesse angulaire P_out pour obtenir une vitesse angulaire de sortie compensée $\Delta\omega'$; la vitesse angulaire de sortie compensée étant

$$\Delta\omega' = P\_out + \Delta\omega\_PLL ;$$

et

une unité de commande (24) configurée pour corriger la vitesse angulaire en temps réel ω1 qui est utilisée pour la commande du compresseur en fonction de la sortie de vitesse angulaire compensée et pour commander le compresseur en fonction de la vitesse angulaire en temps réel corrigée ω1 ;

dans lequel le filtrage de l'erreur d'arbre Δθ par l'unité d'acquisition de montant de compensation de vitesse angulaire (22) comprend :

développer en série de Fourier l'erreur d'arbre Δθ pour obtenir une expression fonctionnelle de l'erreur d'arbre par rapport à un angle mécanique θm ;

multiplier l'expression fonctionnelle de l'erreur d'arbre par $\cos(\theta_{mn} + \theta_{shift-Pn})$ et $-\sin(\theta_{mn} + \theta_{shift-Pn})$ respectivement ; extraire une composante d'axe d d'une nième harmonique de Δθ et une composante d'axe q d'une nième harmonique de Δθ par un filtre passe-bas ou un intégrateur ; $\theta_{mn}$ est un angle mécanique d'une nième harmonique et $\theta_{shift-Pn}$ est un angle de compensation de phase d'une nième harmonique ; et éliminer une composante d'axe d et une composante d'axe q d'une ou de plusieurs harmoniques pour compléter un processus de filtrage de l'erreur d'arbre Δθ.

7. Dispositif selon la revendication 6, **caractérisé en ce que** l'unité d'acquisition de montant de compensation de vitesse angulaire (22), configurée pour filtrer l'erreur d'arbre Δθ pour obtenir une erreur d'arbre corrigée Δθ' dans laquelle au moins une partie de la fluctuation de l'erreur d'arbre est éliminée, comprend en outre :
filtrer l'erreur d'arbre Δθ pour au moins supprimer une composante d'axe d et une composante d'axe q d'une première harmonique pour réaliser le filtrage de la première composante harmonique de Δθ et obtenir une erreur d'arbre corrigée Δθ' dans laquelle au moins la première composante harmonique est supprimée.

8. Dispositif selon la revendication 7, **caractérisé en ce que**, l'unité d'acquisition de montant de compensation de vitesse angulaire (22), configurée pour filtrer l'erreur d'arbre Δθ pour obtenir une erreur d'arbre corrigée Δθ' dans laquelle au moins une partie de la fluctuation de l'erreur d'arbre est éliminée, comprend en outre :
filtrer l'erreur d'arbre Δθ pour supprimer une composante d'axe d et une composante d'axe q d'une seconde harmonique de Δθ pour réaliser le filtrage des première et seconde composantes harmoniques de Δθ et pour obtenir l'erreur d'arbre corrigée Δθ' dans laquelle les première et seconde composantes harmoniques sont supprimées.

9. Dispositif selon la revendication 6, **caractérisé en ce que**, dans l'unité d'acquisition de montant de compensation de vitesse angulaire (22) une composante d'axe d et une composante d'axe q d'une ou plusieurs harmoniques sont éliminées pour compléter un processus de filtrage de l'erreur d'arbre Δθ comprend en outre :

extraire une composante d'axe d d'une nième harmonique de Δθ et une composante d'axe q d'une nième harmonique de Δθ par un intégrateur ;

l'unité d'acquisition de montant de compensation de vitesse angulaire (22) est en outre configurée de façon que chaque résultat filtré est soumis à une transformée de Fourier inverse pour obtenir le montant de compensation de vitesse angulaire P_out correspondant à l'erreur d'arbre corrigée Δθ' dans laquelle une ou plusieurs composantes harmoniques sont supprimées.

10. Dispositif selon l'une quelconque des revendications 6 à 9, **caractérisé en ce qu'**un angle de compensation de phase $\theta_{shift-Pn}$ est déterminé en fonction de paramètres de gain en boucle fermée $K_{P\_PLL}$ et $K_{I\_PLL}$ et d'une commande de vitesse angulaire ω*_in de la boucle à verrouillage de phase, qui satisfait :

$$\theta_{shift-Pn} = (aK_{P\_PLL} + bK_{I\_PLL} + cK_{P\_PLL}/K_{I\_PLL} + d\omega^{*}\_in)^{*}\pi$$

dans laquelle a, b, c, d sont des coefficients constants.

Obtaining a shaft error which reflects a deviation of an actual position of a compressor rotor from an estimated position of a compressor rotor ⌇ 11

Filtering the shaft error to obtain a corrected shaft error in which at least a part of a shaft error fluctuation is eliminated ⌇ 12

Obtaining an angular velocity compensation amount according to the corrected shaft error ⌇ 13

Compensating an output angular velocity of the phase-locked loop regulator in the phase-locked loop for compressor control with the angular velocity compensation amount so as to obtain a compensated angular velocity output ⌇ 14

Correcting the real-time angular velocity which is used for compressor control according to the compensated output angular velocity and controlling the compressor according to the corrected real-time angular velocity ⌇ 15

## Fig. 1

**Fig. 2**

**Fig.3**

```
┌──────────────────────────┐          ┌──────────────────────────┐
│                          │          │ angular velocity         │
│ shaft error acquisition  │─────────▶│ compensation             │  ⌇ 22
│ unit                     │          │ amount acquisition unit  │
└──────────────────────────┘          └──────────────────────────┘
            ⌇ 21                                    │
                                                    ▼
                                      ┌──────────────────────────┐
                                      │ compensated angular      │
                                      │ velocity                 │  ⌇ 23
                                      │ output acquisition unit  │
                                      └──────────────────────────┘
                                                    │
                                                    ▼
                                      ┌──────────────────────────┐
                                      │     control unit         │  ⌇ 24
                                      └──────────────────────────┘
```

# Fig.4

**EP 3 896 366 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104038127 A